# EUROPEAN PATENT APPLICATION

(11) **EP 4 224 557 A1**
(43) Date of publication of application: **09.08.2023**
(21) Application number: 21875193.1
(22) Date of filing: 14.09.2021
(51) Int. Cl.: H01M 4/131, H01M 4/505, H01M 4/525, H01M 4/62

(54) **POSITIVE ELECTRODE FOR NONAQUEOUS ELECTROLYTE SECONDARY BATTERIES, AND NONAQUEOUS ELECTROLYTE SECONDARY BATTERY**

(30) Priority: 30.09.2020 JP 2020166148
(71) Applicant: Panasonic Intellectual Property Management Co., Ltd., Osaka-shi, Osaka 540-6207 (JP)
(72) Inventor: HARADA Tomohiro, Chuo-ku, Osaka-shi, Osaka 540-6207 (JP); YAMAMOTO Rina, Chuo-ku, Osaka-shi, Osaka 540-6207 (JP)
(74) Representative: Novagraaf International SA
(86) International application number: PCT/JP2021/033786
(87) International publication number: WO 2022/070891

(57) **Abstract**

Disclosed is a positive electrode for a non-aqueous electrolyte secondary battery including: a positive electrode current collector sheet; and a positive electrode material mixture layer supported on the positive electrode current collector sheet. The positive electrode material mixture layer contains a positive electrode active material, a binder, and a conductive agent. The positive electrode active material contains a composite oxide that has a layered rock-salt type crystal structure and contains lithium and an element A other than lithium. The element A contains at least nickel. The atomic ratio Ni/A of nickel relative to the element A is 0.8 or more and 1.0 or less. The binder contains a polymer binder that has a three-dimensional mesh structure. The mass of the positive electrode material mixture layer supported per m² of the positive electrode current collector sheet is 280 g or more.

## Description

### [Technical Field]

The present disclosure relates to a positive electrode for a non-aqueous electrolyte secondary battery, and a non-aqueous electrolyte secondary battery.

### [Background Art]

Non-aqueous electrolyte secondary batteries as typified by lithium ion secondary batteries are used as the power sources of electronic devices such as mobile terminals, the power sources of vehicles such as electric vehicles, and the like. A positive electrode of a non-aqueous electrolyte secondary battery can be obtained by, for example, applying a positive electrode slurry that contains a positive electrode material mixture that contains a positive electrode active material and the like to a surface of a positive electrode current collector sheet, drying and rolling the coating film to form a positive electrode material mixture layer. As the positive electrode active material, for example, a composite oxide that has a layered rock-salt type crystal structure and contains lithium and nickel is used.

For achieving a high capacity, it is effective to increase the thickness of the positive electrode material mixture layer by increasing the amount of the positive electrode slurry applied to the positive electrode current collector sheet. When an electrode group is formed by spirally winding the positive electrode and a negative electrode with a separator interposed therebetween, by increasing the thickness of the positive electrode material mixture layer, it is possible to reduce the number of times the positive electrode is spirally wound and also reduce the amount of the separator and the positive electrode current collector sheet that does not contribute to capacity. Accordingly, the amount of the active material can be increased in an amount corresponding to the reduce amount (for example, Non Patent Literature 1).

### [Citation List]

### [Non Patent Literature]

[NPL 1] Topics, Activities of ABRI, FB Technical News, No. 74 (2018. 11), page 34

### [Summary of Invention]

In a non-aqueous electrolyte secondary battery, the direct current resistance (DCR) increases significantly when the amount of the positive electrode material mixture layer supported on the positive electrode current collector sheet is very large. The increase in the DCR is considered to be caused by an increase in the internal resistance of the positive electrode material mixture layer. It is considered that, when the amount of the positive electrode material mixture layer supported on the positive electrode current collector sheet is increased considerably, the thickness of the positive electrode material mixture layer increases correspondingly, which increases the lengths of electronic conduction paths, resulting in a reduction in the current collection efficiency.

In view of the above, one aspect of the present disclosure relates to a positive electrode for a non-aqueous electrolyte secondary battery including: a positive electrode current collector sheet; and a positive electrode material mixture layer supported on the positive electrode current collector sheet, wherein the positive electrode material mixture layer contains a positive electrode active material, a binder, and a conductive agent, the positive electrode active material contains a composite oxide that has a layered rock-salt type crystal structure and contains lithium and an element A other than lithium, the element A contains at least nickel, an atomic ratio Ni/A of nickel relative to the element A is 0.8 or more and 1.0 or less, the binder contains a polymer binder that has a three-dimensional mesh structure, and a mass of the positive electrode material mixture layer supported per m² of the positive electrode current collector sheet is 280 g or more.

Also, another aspect of the present disclosure relates to a non-aqueous electrolyte secondary battery including: a positive electrode; a negative electrode; and a non-aqueous electrolyte, wherein, as the positive electrode, the above-described positive electrode is used.

According to the present disclosure, it is possible to obtain a non-aqueous electrolyte secondary battery in which an increase in the DCR can be suppressed while increasing the capacity of the non-aqueous electrolyte secondary battery.

### [Brief Description of Drawing]

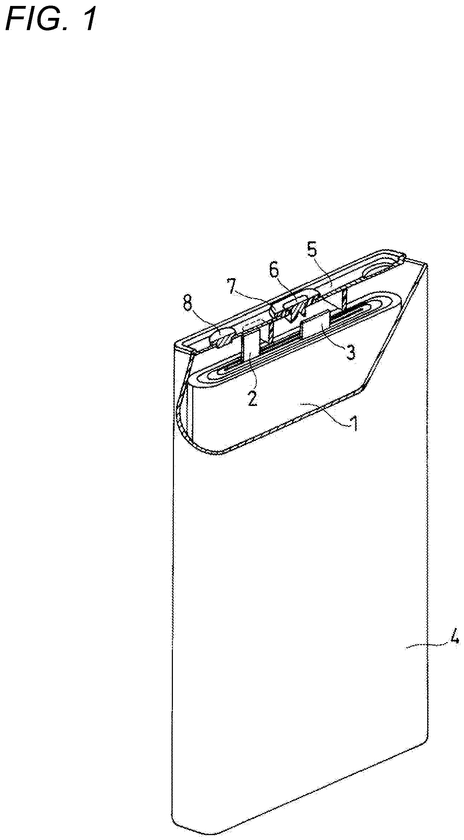

[FIG. 1] FIG. 1 is a schematic perspective view, partially cut away, of a non-aqueous electrolyte secondary battery according to an embodiment of the present disclosure.

### [Description of Embodiment]

### [Positive Electrode for Non-Aqueous Electrolyte Secondary Battery]

A positive electrode for a non-aqueous electrolyte secondary battery according to an embodiment of the present disclosure includes: a positive electrode current collector sheet; and a positive electrode material mixture layer supported on the positive electrode current collector sheet. The positive electrode material mixture layer contains a positive electrode active material, a binder, and a conductive agent. The positive electrode active material contains a nickel-based composite oxide. That is, the composite oxide has a layered rock-salt type crystal structure, and contains lithium (Li) and an element A other than Li. The element A contains at least nickel (Ni). The atomic ratio Ni/A of Ni relative to the element A is 0.8 or more and 1.0 or less. The binder contains a polymer binder (hereinafter also referred to as "binder P") that has a three-dimensional mesh structure. The positive electrode material mixture layer has a large thickness. Specifically, the mass of the positive electrode material mixture layer supported per m² of the positive electrode current collector sheet is 280 g or more.

By using a nickel-based composite oxide with an atomic ratio Ni/A of 0.8 or more as the positive electrode active material, and increasing the thickness of the positive electrode material mixture layer by setting the amount of the positive electrode material mixture layer supported per m² of the positive electrode current collector sheet to 280 g or more, it is possible to increase the rated capacity of the battery to a high level that was not achieved in conventional batteries.

Also, it is considered that, by containing a polymer binder that has a three-dimensional mesh structure in the positive electrode material mixture layer that has a large thickness, the distribution of the conductive agent that is compatible with the binder is improved, and the electronic conduction paths develop into a high-quality three-dimensional structure in the positive electrode material mixture layer, which reduces the internal resistance of the positive electrode material mixture layer. The reason that the distribution of the conductive agent is improved is considered to be that the polymer binder that has a three-dimensional mesh structure causes the composite oxide particles and the conductive agent to bind to each other with an excellent binding strength in the positive electrode material mixture layer. Furthermore, the adhesion between the positive electrode material mixture layer and the positive electrode current collector sheet is improved, and thus the resistance to stress caused by expansion and contraction of the positive electrode active material during charge and discharge is also improved. Accordingly, even when a thick positive electrode material mixture layer is formed, the reduction in the adhesion between the positive electrode material mixture layer and the positive electrode current collector sheet is suppressed. Thus, the increase in the DCR of the battery is suppressed, and the cycle characteristics and the like are improved. The effect of suppressing the increase in the DCR when the amount of the positive electrode material mixture layer supported on the positive electrode current collector sheet is large can be obtained specifically when the polymer binder has a three-dimensional mesh structure. For example, when a linear polymer binder (for example, polyvinylidene fluoride) is used, the effect of suppressing the increase in the DCR described above is sufficient.

The binder P may be formed by, for example, crosslinking a polymer that functions as a binder. The crosslinking can be performed using a known method such as adding a cross-linking agent, heating, or irradiation with ultraviolet rays or electron beams. Among these, from the viewpoint of electrochemical stability at a positive electrode potential, it is preferable that the binder P contains a fluorine-containing polymer, and the fluorine-containing polymer is cross-linked. That is, the three-dimensional mesh structure is preferably formed as a result of the fluorine-containing polymer that has a binding strength being cross-linked.

The fluorine-containing polymer may contain at least one selected from the group consisting of vinylidene fluoride (VDF)-derived units, hexafluoropropylene (HFP)-derived units, and tetrafluoroethylene (TFE)-derived units. In this case, the fluorine-containing polymer itself has excellent binding properties. Among these, from the viewpoint of electrochemical stability and the stability of the positive electrode slurry, the fluorine-containing polymer preferably contains at least VDF-derived units. The fluorine-containing polymer preferably contains at least one selected from the group consisting of polyvinylidene fluoride (PVDF) and a copolymer that contains units derived from vinylidene fluoride (VDF). The copolymer may be a block copolymer or a random copolymer.

The copolymer that contains units derived from VDF may include a copolymer of VDF and a fluorine-containing monomer (hereinafter referred to as "monomer F") other than VDF. That is, the copolymer may contain VDF-derived units and monomer F-derived units. The monomer F may contain at least one selected from the group consisting of HFP, TFE, trifluoroethylene, and chlorotrifluoroethylene. Among these, from the viewpoint of ensuring the flexibility of the positive electrode plate, the monomer F is preferably HFP. In the copolymer, the molar ratio (monomer F/VDF) of the monomer F-derived units relative to the VDF-derived units may be, for example, 0.01 or more and 0.5 or less, or 0.05 or more and 0.3 or less.

The fluorine-containing polymer may be cross-linked by a crosslinkable monomer (cross-linking agent). For example, the fluorine-containing polymer may be dehydrocondensation reacted with the crosslinkable monomer to form an amide bond or an ester bond to crosslink the fluorine-containing polymer units via the crosslinkable monomer. The crosslinkable monomer may have a functional group (for example, a hydroxy group, a carboxy group, an amino group, or the like) that contributes to the condensation reaction. Specific examples of the crosslinkable monomer include trimethylhexamethylenediamine, benzoyl peroxide, dicumyl peroxide, bisphenol A, hexamethylenediamine, ethylenediamine, isopropyl ethylenediamine, naphthalenediamine, 2,4,4-trimethyl-1 or 6-hexanediamine, and the like. The fluorine-containing polymer may have a functional group (for example, a hydroxy group, a carboxy group, an amino group, or the like) that contributes to the dehydrocondensation reaction with the crosslinkable monomer, or the functional group may be introduced into the fluorine-containing polymer. For example, a fluorine-containing polymer into which a carboxy group is introduced may be dehydrocondensation reacted with a crosslinkable monomer that has two amino groups to crosslink the fluorine-containing polymer units via the crosslinkable monomer with an amide bond.

The average molecular weight of the fluorine-containing polymer (for example, PVDF or PVDF-HFP) used together with the cross-linking agent described above is, for example, 100,000 or more and 2,000,000 or less. Here, the average molecular weight is a number average molecular weight (in terms of polystyrene) determined based on gel permeation chromatography (GPC).

The binder contains at least the binder P. The proportion of the binder P relative to the entire binder is, for example, 50 mass% or more, and the binder may be composed of 100% of the binder P. The binder may contain a small amount of a component other than the binder P. As the component other than the binder P, for example, a resin material (for example, fluorine resin, polyolefin resin, acrylic resin, or the like) that does not have a three-dimensional mesh structure can be used. Specific examples include polytetrafluoroethylene (PTFE), polyvinylidene fluoride (PVDF), polyethylene, polypropylene, polyacrylic acid, polymethyl acrylate, an ethylene-acrylic acid copolymer, and the like. The binder P and the component other than the binder P may be used alone or in a combination of two or more.

The amount of the binder contained in the positive electrode material mixture layer is preferably, for example, 0.5 parts by mass or more and 2 parts by mass or less per 100 parts by mass of the positive electrode active material. In this case, the effect of suppressing the increase in the DCR when the amount of the positive electrode material mixture layer supported on the positive electrode current collector sheet is large is likely to be obtained while increasing the capacity. Also, the binding strength of the positive electrode material mixture layer and the adhesion strength between the positive electrode material mixture layer and the positive electrode current collector sheet are also likely to be improved. In this case, the binder may be composed of 100% of the binder P.

From the viewpoint of achieving a high capacity and improving the cycle characteristics, the amount of the positive electrode material mixture layer supported per m² of the positive electrode current collector sheet may be 280 g or more and 400 g or less, or 280 g or more and 360 g or less. In this case, the thickness of the positive electrode material mixture layer is, for example, 50 µm or more and 250 µm or less.

The density of the positive electrode material mixture layer may be 3.45 g/cm³ or more and 3.75 g/cm³ or less, or 3.5 g/cm³ or more and 3.75 g/cm³ or less. When the density of the positive electrode material mixture layer is 3.45 g/cm³ or more, the number of contact points of the composite oxide to the conductive agent and the binder increases. Also, a sufficient number of contact points between composite oxide particles are likely to be formed. As a result, a sufficient number of electronic conduction paths are formed, and thus a high capacity is likely to be obtained. Also, the binding strength of the positive electrode material mixture layer and the adhesion strength between the positive electrode material mixture layer and the positive electrode current collector sheet are also likely to be improved. Also, the above-described case is advantageous in terms of improving the energy density of a cylindrical battery or the like, and is effective when a spirally wound electrode group is formed using an even longer electrode plate.

When the density of the positive electrode material mixture layer is 3.75 g/cm³ or less, an increase in strain of the positive electrode material mixture layer caused by expansion and contraction of the composite oxide during charge and discharge is suppressed, and thus the stress generated between the positive electrode material mixture layer and the positive electrode current collector sheet is likely to be reduced, and the reduction in the adhesion between the positive electrode material mixture layer and the positive electrode current collector sheet is likely to be suppressed. Also, the composite oxide is likely to come into contact with the non-aqueous electrolyte in the positive electrode material mixture layer, and thus the increase in the reaction resistance is suppressed. Voids are appropriately ensured in the positive electrode material mixture layer, and the diffusion resistance to the non-aqueous electrolyte (migration of lithium ions) is sufficiently reduced even when the charge rate is high. Accordingly, a high discharge capacity is likely to be obtained.

The positive electrode active material contains at least the nickel-based composite oxide described above. When the atomic ratio Ni/A of the nickel-based composite oxide is 0.8 or more, the proportion of Ni relative to the element A is large, and thus a high capacity is likely to be achieved. The proportion n of the nickel-based composite oxide relative to the entire positive electrode active material is, for example, 80 mass% or more, and the positive electrode active material may be composed of 100% of the nickel-based composite oxide. The positive electrode active material may contain a small amount of a composite oxide (for example, LiCoO₂, Li₂NiO₂, Li₅FeO₄, or the like) other than the nickel-based composite oxide.

The element A contains at least Ni, and may further contain at least one selected from the group consisting of cobalt (Co), manganese (Mn), aluminum (Al), magnesium (Mg), calcium (Ca), ion (Fe), copper (Cu), zinc (Zn), chromium (Cr), titanium (Ti), niobium (Nb), zirconium (Zr), vanadium (V), tantalum (Ta), molybdenum (Mo), tungsten (W), strontium (Sr), silicon (Si), and boron (B).

In particular, the element A preferably contains Ni and at least one selected from the group consisting of Co, Mn, and Al, and more preferably contains Ni, Co, and Mn and/or Al. When the element A contains Co, the phase transition of the composite oxide that contains Li and Ni during charge and discharge is suppressed, and the crystal structure stability is improved. Accordingly, the cycle characteristics are likely to be improved. When the element A contains Mn and/or Al, the thermal stability is improved.

The nickel-based composite oxide is preferably an oxide represented by the following general formula: LiₐNiₓCo_{y}M_{1-x-y}O₂. In the general formula, 0.97 ≤ a ≤ 1.2, 0.8 ≤ x ≤ 1.0, and 0 ≤ y ≤ 0.2 are satisfied, and M preferably represents at least one selected from the group consisting of Mn, Al, B, W, Sr, Mg, Mo, Nb, Ti, Si, and Zr.

When a that indicates the composition ratio of Li takes a value of 0.97 or more and 1.2 or less, cation mixing in which Ni ions migrate into Li sites is unlikely to occur, and thus the output characteristics are likely to be improved. When x that indicates the composition ratio of Ni takes a value of 0.8 or more and 1 or less, the proportion of Ni relative to the element A is large, and thus a high capacity is likely to be achieved. y may take a value of greater than 0 and 0.2 or less. In this case, by containing Co in the nickel-based composite oxide, the crystal structure stability is likely to be improved, and the cycle characteristics are likely to be improved. The element M may be Al, and 0 < y ≤ 0.2 and 0 < (1-x-y) ≤ 0.05 may be satisfied. In this case, by containing Al in the nickel-based composite oxide, the thermal stability of the composite oxide is likely to be improved. Here, the value of a varies during charge and discharge.

The composite oxide particles usually contain secondary particles, each of which is an aggregate of a plurality of primary particles. The secondary particles have an average particle size (D50) of, for example, 5 µm or more and 20 µm or less. As used herein, the term "average particle size (D50)" refers to a median diameter at 50% cumulative volume in a volume-based particle size distribution. The average particle size (D50) of the secondary particles can be determined by performing particle size distribution measurement based on a laser diffraction method.

As a result of the positive electrode material mixture layer containing the conductive agent, a sufficient number of conduction paths are formed between positive electrode active material particles and between the positive electrode active material and the positive electrode current collector sheet. The conductive agent preferably contains carbon nanotubes (CNTs). The CNTs are easily entangled with the polymer binder that has a three-dimensional mesh structure, and the contact points between the CNTs and the composite oxide are firmly maintained by the polymer binder during charge and discharge.

The average length of the CNTs is preferably 0.5 µm or more, more preferably 0.5 µm or more and 10.0 µm or less, and even more preferably 0.5 µm or more and 5.0 µm or less. In this case, the CNT are easily entangled with the polymer binder that has a three-dimensional mesh structure, and the contact points between the CNTs and the composite oxide are likely to be firmly maintained by the polymer binder during charge and discharge. Also, the CNTs are likely to be present between the composite oxide particles, and thus a sufficient number of electronic conduction paths are likely to be formed between the composite oxide particles by the CNTs.

From the viewpoint of improving the cycle characteristics, the average diameter of the CNTs may be 0.5 nm or more and 30 nm or less, or 0.5 nm or more and 20 nm or less. When the average diameter of the CNTs is 0.5 nm or more, the strength of the CNTs is sufficiently ensured, and the electronic conduction paths are likely to be maintained by the CNTs during charge and discharge. Also, the CNTs are likely to be present between the composite oxide particles.

The average length and the average diameter of the CNTs can be determined by obtaining an image of a cross section of the positive electrode material mixture layer or an image of the CNTs by using a scanning electron microscope (SEM) or a transmission electron microscope (TEM), randomly selecting a plurality of number of CNTs (for example, about 50 to 200 CNTs) using the image to measure the length and the diameter of the randomly selected CNTs, and averaging each of the measured length and diameter values. As used herein, the term "the length of the CNTs" refers to a length measured when the CNTs are straightened out.

The conductive agent may contain a conductive material other than the CNTs. Examples of the conductive material other than the CNT include: graphites such as natural graphite and artificial graphite; carbon blacks such as acetylene black; metal fibers; metal powders such as aluminum powder; and the like. These conductive agents may be used alone or in a combination of two or more.

The amount of the conductive agent contained in the positive electrode material mixture layer is preferably, for example, 0.01 parts by mass or more and 1.0 part by mass or less per 100 parts by mass of the positive electrode active material. In this case, a sufficient number of electronic conduction paths are likely to be formed between the positive electrode active material particles by the conductive agent while increasing the capacity. In this case, the conductive agent may be composed of 100% of CNTs.

As the positive electrode current collector sheet, for example, a poreless conductive substrate (a metal foil or the like) or a porous conductive substrate (a mesh, a net, a punched sheet, or the like) can be used. Examples of the material of the positive electrode current collector sheet include stainless steel, aluminum, an aluminum alloy, titanium, and the like. The thickness of the positive electrode current collector sheet is, for example, 3 to 50 µm.

A method for producing the positive electrode includes the steps of: for example, preparing a positive electrode slurry by dispersing a positive electrode material mixture that contains a positive electrode active material, a binder, and a conductive agent in a dispersion medium; applying the positive electrode slurry to a surface of a positive electrode current collector sheet, followed by drying, to form a positive electrode material mixture layer. The dried coating film may be rolled if necessary. The positive electrode material mixture layer may be formed only on one surface of the positive electrode current collector sheet, or may be formed on both surfaces of the same. As the dispersion medium, for example, water, an alcohol such as ethanol, N-methyl-2-pyrolidone (NMP), or the like can be used.

### [Non-Aqueous Electrolyte Secondary Battery]

A non-aqueous electrolyte secondary battery according to an embodiment of the present disclosure includes a positive electrode, a negative electrode, and a non-aqueous electrolyte. As the positive electrode, the positive electrode for a non-aqueous electrolyte secondary battery described above is used.

The negative electrode includes: for example, a negative electrode current collector sheet; and a negative electrode material mixture layer supported on the negative electrode current collector sheet. The negative electrode can be obtained by, for example, applying a negative electrode slurry prepared by dispersing a negative electrode material mixture in a dispersion medium to a surface of a negative electrode current collector sheet, followed by drying, to form a negative electrode material mixture layer. The dried coating film may be rolled if necessary. The negative electrode material mixture layer may be formed on one surface of the negative electrode current collector sheet, or may be formed on both surfaces of the same. The negative electrode material mixture contains a negative electrode active material as an essential component, and may contain a binder, a conductive agent, a thickening agent, and the like as optional components. As the binder, any of the components other than the binder P listed above, a rubber material such as styrene-butadiene rubber, and the like can be used. As the dispersion medium, any of the dispersion media listed as examples of the dispersion medium that can be used in the positive electrode can be used. Also, as the conductive agent, any of the conductive agents listed as examples of the conductive agent that can be used in the positive electrode can be used except graphite. As the thickening agent, for example, any of carboxymethyl cellulose (CMC), modified carboxymethyl cellulose (including a salt such as an Na salt), and the like can be used.

Examples of the negative electrode active material include a carbon material, silicon, a silicon-containing material, a lithium alloy, and the like.

From the viewpoint of achieving a high capacity, the negative electrode active material preferably contains a Si-based active material that contains at least one of silicon and a silicon-containing material. As the silicon-containing material, for example, a composite material that contains: a silicate phase that contains at least one of an alkali metal element and a Group II element; and silicon particles dispersed in the silicate phase can be used. In this case, the initial charge discharge efficiency and the cycle characteristics are improved. The composite material contains, for example, a lithium silicate phase and silicon particles dispersed in the lithium silicate phase. The lithium silicate phase may have, for example, a composition represented by Li₂ᵤSiOᵤ₊₂ (where 0 < u < 2). As the silicon-containing material, SiO_{z} (where 0.5 ≤ z ≤ 1.5) that contains a SiO₂ phase and silicon particles dispersed in the SiO₂ phase may be used. The surfaces of the silicon-containing material particles each may be covered with a conductive layer that contains a conductive material such as a carbon material.

Examples of the carbon material include graphite, graphitizable carbon (soft carbon), non-graphitizable carbon (hard carbon), and the like. Among these, it is preferable to use graphite because it has excellent charge discharge stability and a small irreversible capacity. As used herein, the term "graphite" means a material that has a graphite-type crystal structure, and examples include natural graphite, artificial graphite, graphitized mesophase carbon particles, and the like. These carbon materials may be used alone or in a combination of two or more.

From the viewpoint of ease of obtaining a good balance of favorable cycle characteristics and a high capacity, it is preferable to use an Si-based active material and a carbon material in combination. From the viewpoint of achieving a high capacity, the proportion of the Si-based active material relative to the total amount of the Si-based active material and the carbon material is, for example, preferably 0.5 mass% or more, more preferably 1 mass% or more, and even more preferably 2 mass% or more. Also, from the viewpoint of improving the cycle characteristics, the proportion of the Si-based active material relative to the total amount of the Si-based active material and the carbon material is, for example, preferably 30 mass% or less, more preferably 20 mass% or less, and even more preferably 15 mass% or less.

As the negative electrode current collector sheet, for example, any of the conductive substrates listed as examples of the conductive substrate that can be used in the positive electrode can be used. Examples of the material of the negative electrode current collector sheet include stainless steel, nickel, a nickel alloy, copper, a copper alloy, and the like. The thickness of the negative electrode current collector sheet is, for example, 1 to 50 µm.

The non-aqueous electrolyte contains a non-aqueous solvent and a lithium salt dissolved in the non-aqueous solvent.

As the non-aqueous solvent, for example, a cyclic carbonic ester, a linear carbonic ester, a cyclic carboxylic acid ester, a linear carboxylic acid ester, or the like is used. Examples of the cyclic carbonic ester include propylene carbonate (PC), ethylene carbonate (EC), and the like. It is also possible to use a cyclic carbonic ester that has an unsaturated bond such as vinylene carbonate (VC). It is also possible to use a cyclic carbonic ester that has a fluorine atom such as fluoroethylene carbonate (FEC). Examples of the linear carbonic ester include diethyl carbonate (DEC), ethyl methyl carbonate (EMC), dimethyl carbonate (DMC), and the like. Examples of the cyclic carboxylic acid ester include γ-butyrolactone (GBL), γ-valerolactone (GVL), and the like. Examples of the linear carboxylic acid ester include methyl formate, ethyl formate, propyl formate, methyl acetate, ethyl acetate, propyl acetate, methyl propionate, ethyl propionate, propyl propionate, and the like. These non-aqueous solvents may be used alone or in a combination of two or more.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borate salts, imido salts, and the like. Examples of the borate salts include lithium bis(1,2-benzenediolate(2-)-O,O')borate, lithium bis(2,3-naphthalenediolate(2-)-O,O')borate, lithium bis(2,2'-biphenyldiolate(2-)-O,O')borate, lithium bis(5-fluoro-2-olate-1-benzenesulfonyl-O,O')borate, and the like. Examples of the imido salts include lithium bis(fluorosulfonyl)imide (LiN(FSO₂)₂), lithium bis(trifluoromethanesulfonyl)imide (LiN(CF₃SO₂)₂), lithium (trifluoromethanesulfonyl)(nonafluorobutanesulfonyl)imide (LiN(CF₃SO₂) (C₄F₉SO₂)), lithium bis(pentafluoroethanesulfonyl)imide (LiN(C₂F₅SO₂)₂), and the like. These lithium salts may be used alone or in a combination of two or more. The concentration of the lithium salt in the non-aqueous electrolyte is, for example, 0.5 mol/L or more and 2 mol/L or less.

Usually, it is desirable that a separator is interposed between the positive electrode and the negative electrode. The separator has high ion permeability, and appropriate mechanical strength and insulating properties. As the separator, a microporous thin film, a woven fabric, a non-woven fabric, or the like can be used. The material of the separator is preferably a polyolefin such as polypropylene or polyethylene.

An example of a structure of a non-aqueous electrolyte secondary battery is a structure in which an electrode group formed by spirally winding a positive electrode and a negative electrode with a separator interposed therebetween is housed in an outer case together with a non-aqueous electrolyte. Alternatively, instead of the spirally wound electrode group, a stacked electrode group formed by stacking a positive electrode and a negative electrode with a separator interposed therebetween, or an electrode group of any other configuration may be used. The non-aqueous electrolyte secondary battery may have any shape such as, for example, a cylindrical shape, a prismatic shape, a coin shape, a button shape, or a laminate shape.

FIG. 1 is a schematic perspective view, partially cut away, of a non-aqueous electrolyte secondary battery according to an embodiment of the present disclosure.

The battery includes a prismatic battery case 4 with a bottom, an electrode group 1 housed in the battery case 4, and a non-aqueous electrolyte. The electrode group 1 includes a long strip-shaped negative electrode, a long strip-shaped positive electrode, and a separator that is interposed between the negative electrode and the positive electrode to prevent the negative electrode and the positive electrode from coming into direct contact with each other. The electrode group 1 is formed by spirally winding the negative electrode, the positive electrode, and the separator around a flat plate-shaped winding core, and removing the winding core.

One end portion of a negative electrode lead 3 is attached to a negative electrode current collector sheet that is included in the negative electrode through welding or the like. The other end portion of the negative electrode lead 3 is electrically connected to a negative electrode terminal 6 that is provided in a sealing plate 5 via a resin insulating plate. The negative electrode terminal 6 is insulated from the sealing plate 5 by a resin gasket 7. One end portion of a positive electrode lead 2 is attached to a positive electrode current collector sheet that is included in the positive electrode through welding or the like. The other end of the positive electrode lead 2 is connected to the underside of the sealing plate 5 via the insulating plate. That is, the positive electrode lead 2 is electrically connected to the battery case 4 that also functions as a positive electrode terminal. The insulating plate separates the electrode group 1 and the sealing plate 5 from each other, and also separates the negative electrode lead 3 and the battery case 4 from each other. A peripheral edge of the sealing plate 5 is fitted to an opening end portion of the battery case 4, and the fitted portion is laser welded. In this way, an opening of the battery case 4 is sealed by the sealing plate 5. An injection hole for injecting an non-aqueous electrolyte formed in the sealing plate 5 is closed by a sealing plug 8.

### [Examples]

Hereinafter, the present disclosure will be described specifically based on examples. However, the present invention is not limited to the examples given below.

### «Example 1»

### (Production of Composite Oxide)

A composite oxide was obtained by mixing Nio_{0.8}Co_{0.17}Al_{0.03}(OH)₂ obtained using a coprecipitation method and Li_{2C}O₃ at an atomic ratio (Li/(Ni+Co+Al)) of Li relative to the total amount of Ni, Co, and Al of 1.05/1, and then calcining the mixture in an oxygen atmosphere. The obtained composite oxide had a composition represented by Li_{1.05}Ni_{0.8}Co_{0.17}Al_{0.03}O₂ (Ni/A = 0.8). The composition of the composite oxide was determined based on ICP emission spectroscopy. A composite oxide powder with an average particle size of 12 µm was obtained by pulverizing and classifying, using a sieve, the obtained composite oxide.

### (Production of Cross-Linked Fluorine-Containing Polymer)

A mixed solution was obtained by dissolving, in methyl isobutyl ketone, PVDF-HFP (a copolymer of vinylidene fluoride and hexafluoropropylene available from Sigma-Aldrich Co., LLC.) and trimethylhexamethylenediamine (available from Tokyo Chemical Industry Co., Ltd.) as a cross-linking agent. The obtained mixed solution was cast to form a film (solution casting method). The formed film was heated at 110°C to produce a cross-linked fluorine-containing polymer (binder P). The amount of trimethylhexamethylenediamine added was 0.1 parts by mass per 100 parts by mass of PVDF-HFP. The binder P in the form of a film was pulverized into a powder.

In order to check whether three-dimensional crosslinking has been successfully carried out, DMA (Dynamic Mechanical Analysis), DSC (Differential Scanning Calorimetry), and EGA (Evolved Gas Analysis) were performed. From the DMA, the storage modulus of the cross-linked fluorine-containing polymer was determined, and it was confirmed that a high storage modulus was achieved through the three-dimensional crosslinking. From the DSC, it was confirmed that the glass transition temperature Tg of the PVDF polymer increased. From the EGA, it was confirmed that the peak start temperature at which a peak of 1,3,5-trifluorobenzene derived from VDF at m/z = 132 occurred shifted toward the high-temperature side. As a result of these analyses, it was confirmed that the obtained cross-linked fluorine-containing polymer had a three-dimensional mesh structure in which the fluorine-containing polymer of PVDF-HFP was cross-linked.

### (Production of Positive Electrode)

A positive electrode slurry was prepared by adding 1 part by mass of a binder, 1 part by mass of a conductive agent, and an appropriate amount of N-methyl-2-pyrolidone (NMP) to 100 parts by mass of a positive electrode active material, followed by stirring. As the positive electrode active material, the composite oxide produced above was used. As the binder, the cross-linked fluorine-containing polymer produced above was used. As the conductive agent, carbon nanofibers (with an average length of 1 µm and an average diameter of 10 nm) were used.

The positive electrode slurry was applied to each surface of an aluminum foil (positive electrode current collector sheet), the coating film was dried, followed by rolling, to form a positive electrode material mixture layer (with a density of 3.5 g/cm³) on each surface of the aluminum foil. In this way, a positive electrode was obtained. At this time, the amount of the positive electrode slurry applied to the positive electrode current collector sheet was adjusted such that the amount of the positive electrode material mixture layer supported per m² of the positive electrode current collector sheet was 280 g.

### (Production of Negative Electrode)

A negative electrode slurry was prepared by adding 1 part by mass of styrene-butadiene rubber (SBR), 1 part by mass of sodium carboxymethyl cellulose (CMC-Na), and an appropriate amount of water to 100 parts by mass of a negative electrode active material, followed by stirring.

As the negative electrode active material, a mixture of a Si-containing material and graphite (with an average particle size (D50) of 25 µm) was used. In the negative electrode active material, the mass ratio of the Si-containing material and the graphite was 10:90. As the Si-containing material, SiOₓ particles (where x = 1, with an average particle size (D50) of 5 µm) having a surface covered with a conductive layer containing conductive carbon were used. The amount of the conductive layer covering the particle surface was 5 parts by mass per 100 parts by mass of the total of the SiOₓ particles and the conductive layer.

The negative electrode slurry was applied to each surface of a copper foil (negative electrode current collector sheet), and the coating film was dried, followed by rolling, to form a negative electrode material mixture layer (with a thickness of 200 µm and a density of 1.4 g/cm³) on each surface of the copper foil. In this way, a negative electrode was obtained.

### (Preparation of Non-Aqueous Electrolyte)

Anon-aqueous electrolyte was obtained by dissolving LiPF₆ in a mixed solvent of ethylene carbonate (EC) and diethyl carbonate (DEC) (at a volume ratio of 3:7) at a LiPF₆ concentration of 1.0 mol/L.

### (Production of Non-Aqueous Electrolyte Secondary Battery)

One end portion of a positive electrode lead made of aluminum was attached to the positive electrode obtained above. One end portion of a negative electrode lead made of nickel was attached to the negative electrode obtained above. The positive electrode and the negative electrode were spirally wound with a polyethylene separator interposed therebetween to produce a spirally wound electrode group. The produced electrode group was vacuum dried at 105°C for 2 hours, and then housed in a cylindrical battery case with a bottom that also functions as a negative electrode terminal. As the battery case, an iron case (with an outer diameter of 18 mm and a height of 65 mm) was used. Next, a non-aqueous electrolyte was injected into the battery case, and then, an opening of the battery case was closed using a metal sealing member that also functions a positive electrode terminal. At this time, a resin gasket was interposed between the sealing member and the opening end portion of the battery case. The other end portion of the positive electrode lead was connected to the sealing member, and the other end portion of the negative electrode lead was connected to an inner bottom surface of the battery case. In this way, a 18650-type cylindrical non-aqueous electrolyte secondary battery (battery A1) was produced.

The battery A1 was subjected to the following evaluations.

### [Evaluation 1: Initial Capacity]

A battery after aging treatment was subj ected to constant current charge at a current of 0.5 C (1800 mA) to a voltage of 4.2 V, and then subjected to constant voltage charge at a voltage of 4.2 V to a current of 0.05 C (180 mA). After that, the battery was subjected to constant current discharge at a current of 0.1 C to a voltage of 2.5 V, and the discharge capacity obtained at this time was defined as the initial capacity. The rest time between the charge and the discharge was set to 10 minutes. The charge and the discharge were performed in an environment at 25°C. The initial capacity is expressed as an index where the initial capacity of a battery B 1 is 100.

### [Evaluation 2: Cycle Capacity Retention Rate]

A battery was subjected to a charge discharge cycle test under the following charge discharge conditions. The rest time between the charge and the discharge was set to 10 minutes. The charge and the discharge were performed in an environment at 25°C.

### <Charge>

The battery was subjected to constant current charge at a current of 0.5 C (1800 mA) to a voltage of 4.2 V, and then subj ected to constant voltage charge at a voltage of 4.2 V to a current of 0.05 C (180 mA).

### <Discharge>

The battery was subjected to constant current discharge at a current of 0.5 C to a voltage of 2.5 V

The battery was repeatedly charged and discharged under the above-described conditions. The proportion (percentage) of the discharge capacity at the 100th cycle relative to the discharge capacity at the first cycle was determined as cycle capacity retention rate (%). The cycle capacity retention rate is expressed as an index where the cycle capacity retention rate of the battery B1 is 100.

### [Evaluation 3: Direct Current Resistance (DCR)]

A battery was charged and discharged twice under the same conditions as those of Evaluation 2 given above. The battery after discharge in the second cycle was subjected to constant current charge at a current of 0.2 C (720 mA) to a voltage of 4.2 V in an environment at 25°C, and then subjected to constant voltage charge at a voltage of 4.2 V to a current of 0.02 C (72 mA). In this way, a fully charged battery (with an SOC of 100%) was obtained.

The fully charged battery was subjected to constant current discharge using a current I of 1 C. A difference ΔV between voltage obtained immediately before a start of discharge and voltage obtained 10 seconds after the start of discharge was determined, and a value (ΔV/I) was obtained as direct current resistance (Ω) by dividing the difference ΔV by the current I. The DCR is expressed as an index where the DCR of the battery B1 is 100.

### «Example 2»

A battery A2 of Example 2 was produced and evaluated in the same manner as the battery A1 of Example 1, except that the amount of the positive electrode slurry applied to the positive electrode current collector sheet was adjusted such that the amount of the positive electrode material mixture layer supported per m² of the positive electrode current collector sheet was 330 g.

### «Comparative Examples 1 and 3»

A battery B1 of Comparative Example 1 and a battery B3 of Comparative Example 3 were produced and evaluated in the same manner as the battery A1 of Example 1, except that PVDF-HFP was used as the binder. The amount of the positive electrode slurry applied to the positive electrode current collector sheet was adjusted such that the amount of the positive electrode material mixture layer supported per m² of the positive electrode current collector sheet was the value shown in Table 1.

### <<Comparative Example 2>>

A battery B2 of Comparative Example 2 was produced and evaluated in the same manner as the battery A1 of Example 1, except that PVDF-HFP was used as the binder.

### <<Comparative Example 4>>

A battery B4 of Comparative Example 4 was produced and evaluated in the same manner as the battery B1 of Comparative Example 1, except that the cross-linked fluorine-containing polymer was used as the binder.

### <<Comparative Example 5>>

A battery B5 of Comparative Example 5 was produced and evaluated in the same manner as the battery A1 of Example 1, except that LiCoO₂ (Ni/A= 0) was used as the positive electrode active material.

The evaluation results of the batteries A1 and A2 and the evaluation results of the batteries B1 to B5 are shown in Table 1.

**[Table 1]**

| Battery No. | Composite oxide Ni/A | Binder | Amount of positive electrode material mixture layer supported per m² of positive electrode current collector sheet (g) | Density of positive electrode material mixture layer (g/cm³) | Average length of CNTs (pm) | Evaluation | | |
|---|---|---|---|---|---|---|---|---|
| | | | | | | Initial capacity (index) | Direct current resistance DCR (index) | Cycle capacity retention rate (index) |
| B1 | 0.8 | PVDH-HFP | 220 | 3.5 | 1 | 100 | 100 | 100 |
| B2 | 0.8 | PVDH-HFP | 280 | 3.5 | 1 | 109 | 120 | 98 |
| B3 | 0.8 | PVDH-HFP | 330 | 3.5 | 1 | 119 | 140 | 96 |
| B4 | 0.8 | Cross-linked fluorine-containing polymer | 220 | 3.5 | 1 | 100 | 92 | 104 |
| B5 | 0 (LiCoO₂₎ | Cross-linked fluorine-containing polymer | 280 | 3.5 | 1 | 91 | 92 | 101 |
| A1 | 0.8 | Cross-linked fluorine-containing polymer | 280 | 3.5 | 1 | 109 | 96 | 101 |
| A2 | 0.8 | Cross-linked fluorine-containing polymer | 330 | 3.5 | 1 | 119 | 104 | 100 |

With the batteries A1 and A2, a small DCR, a large initial capacity, and excellent cycle characteristics were obtained.

With the battery B 1, the amount of the positive electrode material mixture layer supported was smaller than those of the batteries A1 and A2, and thus the initial capacity decreased. With the batteries B2 and B3, the amount of the positive electrode material mixture layer supported was increased, but PVDF-HFP was used as the binder, and thus the DCR increased, as a result of which the cycle characteristics were impaired. With the battery B4, the cross-linked fluorine-containing polymer was used as the binder, but the amount of the positive electrode material mixture layer supported was smaller than those of the batteries A1 and A2, and thus the initial capacity decreased. With the battery B5, LiCoO₂ was used as the positive electrode active material, and thus the initial capacity decreased.

### «Examples 3 to 5»

Batteries A3 to A5 of Examples 3 to 5 were produced and evaluated in the same manner as the battery A1 of Example 1, except that the degree of compression of the dried coating film was adjusted such that the density of the positive electrode material mixture layer was the value shown in Table 2. The evaluation results of the batteries A3 to A5 are shown in Table 2. In Table 2, the evaluation results of the battery A1 are also shown.

**[Table 2]**

| Battery No. | Composite oxide Ni/A | Binder | Amount of positive electrode material mixture layer supported per m² of positive electrode current collector sheet (g) | Density of positive electrode material mixture layer (g/cm³) | Average length of CNTs (pm) | Evaluation | | |
|---|---|---|---|---|---|---|---|---|
| | | | | | | Initial capacity (index) | Direct current resistance DCR (index) | Cycle capacity retention rate (index) |
| A3 | 0.8 | Cross-linked fluorine-containing polymer | 280 | 3.4 | 1 | 108 | 100 | 99 |
| A1 | 0.8 | Cross-linked fluorine-containing polymer | 280 | 3.5 | 1 | 109 | 96 | 101 |
| A4 | 0.8 | Cross-linked fluorine-containing polymer | 280 | 3.75 | 1 | 113 | 92 | 100 |
| as | 0.8 | Cross-linked fluorine-containing polymer | 280 | 3.8 | 1 | 117 | 92 | 98 |

With all the batteries A1 and A3 to A5, a small DCR, a large initial capacity, and excellent cycle characteristics were obtained. In particular, with the batteries A1 and A4 in which the density of the positive electrode material mixture layer was 3.45 g/cm³ or more and 3.75 g/cm³ or less, the DCR was further reduced, and the cycle characteristics were further improved.

### «Examples 6 to 8»

Batteries A6 to A8 of Examples 6 to 8 were produced and evaluated in the same manner as the battery A1 of Example 1, except that CNTs with an average length shown in Table 3 were used as the conductive agent. The evaluation results of the batteries A6 to A8 are shown in Table 3. In Table 3, the evaluation results of the battery A1 are also shown.

**[Table 3]**

| Battery No. | Composite oxide Ni/A | Binder | Amount of positive electrode material mixture layer supported per m² of positive electrode current collector sheet (g) | Density of positive electrode material mixture layer (g/cm³) | Average length of CNTs (pm) | Evaluation | | |
|---|---|---|---|---|---|---|---|---|
| | | | | | | Initial capacity (index) | Direct current resistance DCR (index) | Cycle capacity retention rate (index) |
| A6 | 0.8 | Cross-linked fluorine-containing polymer | 280 | 3.5 | 0.4 | 109 | 116 | 93 |
| A7 | 0.8 | Cross-linked fluorine-containing polymer | 280 | 3.5 | 0.5 | 109 | 104 | 100 |
| A1 | 0.8 | Cross-linked fluorine-containing polymer | 280 | 3.5 | 1 | 109 | 96 | 101 |
| A8 | 0.8 | Cross-linked fluorine-containing polymer | 280 | 3.5 | 5 | 109 | 92 | 102 |

With all the batteries A1 and A6 to A8, a small DCR, a large initial capacity, and excellent cycle characteristics were obtained. In particular, with the batteries A1, A7, and A8 in which the average length of the CNTs was 0.5 µm or more, the DCR was further reduced, and the cycle characteristics were further improved.

### [Industrial Applicability]

The positive electrode for a non-aqueous electrolyte secondary battery according to the present disclosure is suitable for use in, for example, a non-aqueous electrolyte secondary battery that is required to have a high capacity and excellent cycle characteristics.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug

## Claims

1. A positive electrode for a non-aqueous electrolyte secondary battery comprising:
a positive electrode current collector sheet; and
a positive electrode material mixture layer supported on the positive electrode current collector sheet,
wherein the positive electrode material mixture layer contains a positive electrode active material, a binder, and a conductive agent,
the positive electrode active material contains a composite oxide that has a layered rock-salt type crystal structure and contains lithium and an element A other than lithium,
the element A contains at least nickel,
an atomic ratio Ni/A of nickel relative to the element A is 0.8 or more and 1.0 or less,
the binder contains a polymer binder that has a three-dimensional mesh structure, and
a mass of the positive electrode material mixture layer supported per m² of the positive electrode current collector sheet is 280 g or more.

2. The positive electrode for a non-aqueous electrolyte secondary battery in accordance with claim 1,
wherein the composite oxide is represented by the following general formula:
LiₐNiₓCo_{y}M_{1-x-y}O₂,
where 0.97 ≤ a ≤ 1.2, 0.8 ≤ x ≤ 1.0, and 0 ≤ y ≤ 0.2 are satisfied, and M represents at least one selected from the group consisting of Mn, Al, B, W, Sr, Mg, Mo, Nb, Ti, Si, and Zr.

3. The positive electrode for a non-aqueous electrolyte secondary battery in accordance with claim 1 or 2,
wherein the positive electrode material mixture layer has a density of 3.45 g/cm³ or more and 3.75 g/cm³ or less.

4. The positive electrode for a non-aqueous electrolyte secondary battery in accordance with any one of claims 1 to 3,
wherein the conductive agent contains carbon nanotubes, and
the carbon nanotubes have an average length of 0.5 µm or more.

5. The positive electrode for a non-aqueous electrolyte secondary battery in accordance with any one of claims 1 to 4,
wherein the polymer binder contains a fluorine-containing polymer, and
the fluorine-containing polymer is cross-linked.

6. The positive electrode for a non-aqueous electrolyte secondary battery in accordance with claim 5,
wherein the fluorine-containing polymer is cross-linked by a crosslinkable monomer.

7. The positive electrode for a non-aqueous electrolyte secondary battery in accordance with claim 5 or 6,
wherein the fluorine-containing polymer contains at least one selected from the group consisting of polyvinylidene fluoride and a copolymer that contains units derived from vinylidene fluoride.

8. The positive electrode for a non-aqueous electrolyte secondary battery in accordance with claim 7,
wherein the copolymer that contains units derived from vinylidene fluoride includes a copolymer of vinylidene fluoride and a fluorine-containing monomer other than vinylidene fluoride, and
the fluorine-containing monomer other than vinylidene fluoride includes at least one selected from the group consisting of hexafluoropropylene, tetrafluoroethylene, trifluoroethylene, and chlorotrifluoroethylene.

9. Anon-aqueous electrolyte secondary battery comprising:
a positive electrode;
a negative electrode; and
a non-aqueous electrolyte,
wherein, as the positive electrode, the positive electrode in accordance with any one of claims 1 to 8 is used.
